(19) Europäisches Patentamt
European Patent Office
Office européen des brevets

(11) Veröffentlichungsnummer: **0 375 961**
**A2**

(12) **EUROPÄISCHE PATENTANMELDUNG**

(21) Anmeldenummer: **89121949.5**

(22) Anmeldetag: **28.11.89**

(51) Int. Cl.5: **C08L 81/06, C08L 71/00, C08L 51/04**

(30) Priorität: **10.12.88 DE 3841670**

(43) Veröffentlichungstag der Anmeldung: **04.07.90 Patentblatt 90/27**

(84) Benannte Vertragsstaaten: **DE FR GB IT NL**

(71) Anmelder: **BAYER AG**
**D-5090 Leverkusen 1 Bayerwerk(DE)**

(72) Erfinder: **Eckel, Thomas, Dr.**
**Gneisenaustrasse 15a**
**D-4047 Dormagen 1(DE)**
Erfinder: **Wittmann, Dieter, Dr.**
**Wolfskaul 4**
**D-5000 Köln 80(DE)**
Erfinder: **Ott, Karl-Heinz, Dr.**
**Paul-Klee-Strasse 54**
**D-5090 Leverkusen 1(DE)**
Erfinder: **Lindner, Christian, Dr.**
**Im Wasserblech 11**
**D-5000 Köln 91(DE)**

(54) **Schlagzähe, thermoplastiche Polyethersulfon-Formmassen.**

(57) Gegenstand der vorliegenden Erfindung sind schlagzähe Polyethersulfon-Formmassen, enthaltend aromatische Polyethersulfone Dienpfropfpolymerisate und gegebenenfalls weitere thermoplastische Harze, wobei maximal die Hälfte des aromatischen Polyethersulfons durch andere thermoplastische Harze ersetzt werden kann.

EP 0 375 961 A2

## Schlagzähe, thermoplastische Polyethersulfon-Formmassen

Die Erfindung betrifft thermoplastische Formmassen auf Basis von aromatischen Polyethersulfonen und gepfropften, teilchenförmigen, nach einem speziellen Syntheseverfahren hergestellten Dienkautschuken, ein Verfahren zur Herstellung der Formmassen durch Mischen der Komponenten bei erhöhter Temperatur und ihre Verwendung zur Herstellung von Formkörpern vernehmlich durch Spritzguß.

Formmassen aus aromatischen Polyethersulfonen sind bekannt. Sie besitzen im allgemeinen sehr hohe Wärmeformbeständigkeiten und ausgezeichnete Beständigkeit gegenüber Chemikalien, erreichen jedoch häufig nicht die für bestimmte Anwendungen geforderten hohen Kerbschlagzähigkeiten.

Zur Verbesserung der Kerbschlagzähigkeiten werden in DE-AS 1 794 171, US 3 555 119 und US 3 646 162 Mischungen aus Polyethersulfonen mit Schlagzähmodifikatoren vorgeschlagen, die aus Styrol/Acylnitril-gepfropften Butadienkautschuken bestehen (ABS-Typ). Dabei geht jedoch die Wärmeformbeständigkeit der Formmassen stark zurück.

Für viele Anwendungsbereiche von Polyethersulfon-Formmassen, insbesondere im Kfz-Sektor, ist neben einer hohen Kerbschlagzähigkeit auch ein ausreichend hohes Niveau der Zusammenfließnahtfestigkeit notwendig. Dieses ist erforderlich, um auch größere Spritzgußteile mit mehreren Angußstellen in ausreichender Qualität zu erhalten.

Zwar läßt sich mit Kautschukmodifikatoren des ABS-Typs, wie in DE-AS 1 794 171, US 3 555 119 und US 3 646 162 beschrieben, ein für viele Anwendungen von Polyethersulfon-Formmassen ausreichendes Niveau der Raumtemperatur-und Kältezähigkeit erzielen, jedoch zeigen sich bei größeren Spritzgußteilen nachteilige mechanische Eigenschaften wegen zu geringer Fließnahtfestigkeit.

Überraschenderweise wurde nun gefunden, daß sich Mischungen aus aromatischen Polyethersulfonen und gepfropften Dienkautschuken zu Formmassen mit hoher Wärmeformbeständigkeit und daher Zusammenfließnahtfestigkeit verarbeiten lassen, wenn man gepfropfte, teilchenförmige Dienkautschuke einsetzt, die nach einem speziellen Verfahren gepfropft worden sind. Das erfindungsgemäße Herstellungsverfahren für die Pfropfpolymerisate ist dadurch gekennzeichnet, daß man zur Pfropfpolymerisation ein Initiatorsystem aus einem organischen Hydroperoxid und Ascorbinsäure unter Erzielung einer Pfropfausbeute von > 60 Gew.-% verwendet.

Gegenstand der vorliegenden Erfindung sind thermoplastische Formmassen, enthaltend:

A. 5 bis 99, vorzugsweise 40 bis 98, insbesondere 60 bis 97 Gew.-%, bezogen auf die Summe A + B eines aromatischen Polyethersulfons und

B. 1 bis 95, vorzugsweise 2 bis 60, insbesondere 3 bis 40 Gew.-%, bezogen auf die Summe A + B eines Dienpfropfpolymerisats aus

B.1 5 bis 90, vorzugsweise 20 bis 80 Gewichtsteilen einer Mischung aus

B.1.1 50 bis 95 Gew.-Tl. Styrol, α-Methylstyrol, $C_1$-$C_4$-Alkyl- oder Halogen-kernsubstituiertem Styrol, Methylmethacrylat oder Mischungen daraus und

B.1.2 5 bis 50 Gew.-Tl. Acrylnitril, Methacrylnitril, Methylmethacrylat, Maleinsäureanhydrid, $C_1$-$C_4$-Alkyl- bzw. Phenyl-N-substituiertem Maleinimid oder Mischungen daraus, auf

B.2 10 bis 95, vorzugsweise 20 bis 80 Gew.-Tl. Dienkautschuk mit einem mittleren Teilchendurchmesser $d_{50}$ von 0,09 bis 1, vorzugsweise 0,09 bis 0,6 µm und einem Gelgehalt von mehr als 50, vorzugsweise mehr als 70, insbesondere 73 bis 98 Gew.-%, bezogen auf das Gewicht von B.2 und ggf.

C. ein weiteres thermoplastisches Harz, ausgewählt aus der Gruppe der Vinylcopolymerisate, Polyalkylenterephthalate, der aromatischen Polycarbonate, der aromatischen Polyestercarbonate, wobei maximal die Hälfte, vorzugsweise ein Drittel des aromatischen Polyethersulfons gemäß Komponente A durch andere thermoplastische Harze gemäß Komponente C ersetzt werden kann.

### Komponente A

Aromatische Polyethersulfone im Sinne der Erfindung lassen sich als lineare, thermoplastische Polyarylenpolyetherpolysulfone beschreiben, in welchem die Aryleneinheiten von Ether- und Sulfonbindungen unterbrochen sind. Diese Harze erhält man durch Umsetzung eines Alkalimetalldoppelsalzes eines zweiwertigen Phenols (Bisphenols) mit einer zwei Halogenatome aufweisenden benzoiden Verbindung, wobei entweder eine oder beide Verbindung(en) die zum Einbau von Sulfoneinheiten in die Arylen- und Ethereinheiten aufweisende Polymerenkette notwendige Sulfonbindung ($-SO_2-$) besitzt. Die Polyethersulfone sowie ihre Herstellung sind literaturbekannt (s. z.B. US 3 264 536, GB 1 264 900, EP 0 038 028).

Das Polyethersulfonharz besitzt eine Grundstruktur, die aus wiederkehrenden Einheiten der Formel (I)

{O-Z-O-W} (I)
besteht.

Darin bedeuten:

Z den Rest eines zweiwertigen Phenols und

W den Rest der benzoiden Verbindung mit einer inerten, elektronenanziehenden Gruppe,

wobei gilt, daß beide Reste durch aromatische Kohlenstoffatome über Valenzbindungen mit den Ethersauerstoffatomen verbunden sind und mindestens einer der Reste Z und/oder W eine Sulfongruppe zwischen aromatischen Kohlenstoffatomen liefert. Solche Polyethersulfone gehören in die in der USA-Patentschrift 3 264 536 beschriebenen Klasse von Polyarylen-polyetherharzen.

Bevorzugte Diphenole für die Herstellung der aromatischen Polyethersulfone gemäß Komponente A sind Verbindungen der Formel (II)

HO-Z-OH (II)

worin Z einen zweiwertigen, ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel (III)

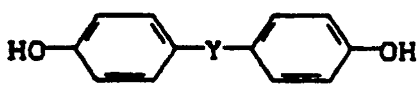

(III)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-,

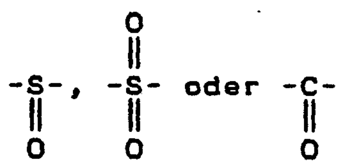

oder bedeutet,

sowie deren kernalkylierte und kernhalogenierte Derivate.

Beispiele für Bisphenole sind:

Hydrochinon,
Resorcin
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)-diisopropylbenzole
sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon sowie deren di- und tetrahalogenierte Derivate.

Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

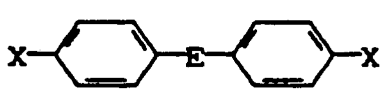

(IV)

Darin bedeuten X Halogenatome wie F, Cl, Br. I-Atome und E elektronenanziehende Gruppen wie

beispielsweise eine Sulfon-, Carbonyl-, Vinyl-, Sulfoxid- oder Azogruppe. Jeder der beiden Kerne kann zusätzlich einen oder mehrere Substituenten aus der Gruppe der gesättigten Kohlenwasserstoffe oder der elektronenanziehenden Verbindungen tragen.

Bevorzugte aromatische Dihalogenverbindungen sind 4,4′-Dichlordiphenylsulfon und 4,4′-Dichlorbenzophenon.

Mögliche Verzweigungsmittel sind die für die Herstellung von aromatischen Polyestern (DE-OS 2 940 024) und für die Herstellung von aromatischen Polyestercarbonaten (DE-OS 3 007 934) genannten (s. Seiten 9 und 10 der DE-OS 3 007 934).

Als Kettenabbrecher für die aromatischen Polyethersulfone gemäß Komponente A werden vorzugsweise Phenol, Alkylphenole mit $C_1$-$C_{12}$-Alkylgruppen und halogenierte Phenole sowie Bromide und Chloride von $C_1$-$C_{10}$-Alkane in Mengen von 0,1 bis 10 Mol.-% (im Falle von Phenolen bezogen auf Diphenole, im Falle von Chloriden bezogen auf die aromatischen Dihalogen-Verbindungen) verwendet.

Die reduzierten Viskositäten ($\eta_{red}$) der aromatischen Polyethersulfone A liegen im Bereich von 0,15 bis 1,5 dl/g, vorzugsweise von 0,35 bis 0,65 dl/g (gemessen an Lösungen von 20 mg Polyethersulfon A in 10 ml $CHCl_3$ bei 25 °C).

Komponente B

In der deutschen Patentanmeldung P 37 08 913.7 (Le A 25 099) wird beschrieben, daß man Pfropfpolymerisate harzbildender Monomerer auf Kautschuke mit hoher Pfropfausbeute herstellen kann (so daß sie überraschend geringe Anteile freier Polymerisate enthalten), wenn man die Pfropfpolymerisation in Emulsion unter Verwendung eines Initiatorsystems aus einem organischen Hydroperoxid und Ascorbinsäure durchführt.

Gemäß einer bevorzugten Ausführungsform führt man die Pfropfpolymerisation der Monomeren B.1 in wäßriger Emulsion in Gegenwart einer Emulsion des Kautschukpolymerisates B.2 bei Temperaturen von 40 bis 70 °C, insbesondere 50 bis 70 °C durch, unter Einsatz eines Initiatorsystems aus organischem Hydroperoxid (I) und Ascorbinsäure (II), wobei 0,3 bis 1,5 Gew.-Tl. (I) und 0,1 bis 1 Gew.-Tl (II), jeweils bezogen auf 100 Gew-Tl. Pfropfmonomere, eingesetzt werden und das Gewichtsverhältnis (I) : (II) 0,3 bis 15, insbesondere 1 bis 10, vorzugsweise 3 bis 8 ist (s. S. 4, Absatz 2 der deutschen Patentanmeldung P 37 08 913.7 (Le A 25 099)).

Gemäß deutscher Patentanmeldung P 37 08 913.7 (Le A 25 099) sind die Pfropfpolymerisate Polymerisate, die durch Polymerisation von harzbildenden Monomeren in Gegenwart eines Dienkautschuks erhalten werden, wobei das Polymerisat der harzbildenden Monomeren möglichst vollständig pfropfpolymerisiert ist.

Bevorzugte Dienkautschuke sind Homopolymerisate von Butadien, Isopren, Chloropren und Copolymerisate dieser Monomeren mit bis zu 40 Gew.-% anderer Monomeren wie Acrylnitril, Styrol, Alkylacrylat, Alkylmethacrylat sowie ggf. geringeren Mengen polyfunktioneller Vinylmonomer wie Divinylbenzol und Diol-bis-acrylate.

Die Kautschuke sind wenigstens partiell vernetzt und besitzen Gelgehalte von mehr als 50 Gew.-%, vorzugsweise von mehr als 70 Gew.-% und insbesondere von 73 bis 98 Gew.-%, und sind teilchenförmig mit mittleren Teilchengrößen ($d_{50}$-Werte) von 0,09 bis 1 µm, vorzugsweise von 0,09 bis 0,6 µm. Solche teilchenförmige Kautschuke sind bekannt. Sie werden durch Emulsionspolymerisation hergestellt und liegen meist als Latices vor.

Besonders bevorzugte Pfropfpolymerisate B besitzen mittlere Teilchengrößen von 0,09 bis 0,2 µm. Diese Pfropfpolymerisate verleihen den Formmassen neben der verbesserten Fließnahtfestigkeit auch deutlich günstigere Tieftemperaturzähigkeit.

Die erfindungsgemäßen Pfropfpolymerisate B sind solche, die man durch Pfropfpolymerisation von 5 bis 90, vorzugsweise 20 bis 80 Gew.-Tl. eines Vinylmonomeren oder eines Vinylmonomerengemisches B.1 auf 10 bis 95, vorzugsweise 20 bis 80 Gew.-Tl. Dienkautschuk B.2 erhält.

Als besonders bevorzugtes Vinylmonomeres wird Methylmethacrylat genannt. Erfindungsgemäße Vinylmonomerenmischungen bestehen aus 50 bis 95 Gew.-Tl. Styrol, α-Methylstyrol (oder anderen Alkyl- oder halogenkernsubstituierten Styrolen) oder Methylmethacrylat einerseits und aus 5 bis 50 Gew.-Tl. Acrylnitril, Methacrylnitril, Methylmethacrylat, Maleinsäureanhydrid oder substituierten Maleinimiden andererseits.

Bevorzugte Copolymerisate zum Aufbau der Pfropfhülle bestehen aus Styrol/Acrylnitril (Verhältnis 72 : 28) oder Styrol/Maleinsäureanhydrid (Verhältnisse 94 - 87 : 6 - 13). Als weitere Vinylmonomerkomponenten können zusätzlich in kleineren Mengen Acrylsäureester von primären oder sekundären aliphatischen $C_2$-$C_{10}$-Alkoholen, vorzugsweise n-Butylacrylat oder Acryl- oder Methacrylsäureestern des tert. Butanols,

vorzugsweise t-Butylacrylat, anwesend sein.

Besonders bevorzugte Pfropfhüllen können auch aus 30 bis 40 Gew.-Tl. α-Methylstyrol, 52 bis 62 Gew-Tl. Methylmethacrylat und 4 bis 14 Gew.-Tl. Acrylnitril aufgebaut sein.

Die Pfropfpolymerisate werden in wäßriger Emulsion durch Polymerisation der Monomeren auf einen in wäßriger Emulsion vorliegenden Kautschuk hergestellt. Dabei werden üblicherweise oberflächenaktive Hilfsmittel eingesetzt wie Emulgatoren oder Dispergatoren sowie ggf. Zusätze, um bestimmte pH-Werte und Elektrolytgehalte bei der Pfropfpolymerisation einzustellen. Unter Umständen kann man die Emulsions-Pfropfpolymerisation auch ohne Emulgatorzusatz durchführen. Insbesondere dann, wenn man mit geringen Monomermengen arbeitet, bezogen auf die Kautschukmenge, oder wenn die in der Kautschukemulsion (Latex) schon selbst vorliegenden Mengen an Emulgator bereits ausreichen, um die Pfropfpolymerisation der Monomeren im Emulsionszustand bei genügender Emulsionsstabilität zu gewährleisten.

Besonders geeignet sind anionische Emulgatoren, vorzugsweise Alkali-Salze von Fettsäuren, Arylsulfonsäuren. Sie werden in Mengen bis zu 5 Gew-%, vorzugsweise bis zu 2,5 Gew.-%, bezogen auf die zu polymerisierenden Monomeren, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, also Hydroperoxide mit großen Halbwertzeiten.

Gemäß deutscher Patentanmeldung P 37 08 913.7 (Le A 25 099) kann das Verfahren beispielsweise wie folgt durchgeführt werden:
Eine wäßrige Emulsion eines partiell vernetzten Dienkautschuks wird diskontinuierlich oder kontinuierlich in wäßriger Emulsion bepfropft; bei Polymerisationstemperaturen von 40 bis 70 °C, insbesondere 50 bis 70 °C, wird die Kautschukemulsion mit den Pfropfmonomeren sowie ggf. zusätzlichem Emulgator und Hydroperoxid sowie Ascorbinsäurelösungen versetzt. Dabei sind die Mengenverhältnisse wie oben beschrieben einzuhalten. In Ausnahmefällen können in die Polymerisation als weitere Komponente des Startersystems katalytisch geringe Mengen Schwermetallkationen, insbesondere Eisen, zugefügt werden, insbesondere dann, wenn Dienkautschukemulsionen verwendet werden müssen, die selbst schon größere Mengen Komplexierungsagenzien enthalten. Normalerweise wird in dem Verfahren ohne Zusatz von Eisenionen gearbeitet; diese Methode ist bevorzugt und erlaubt technisch vorteilhaft die Gewinnung praktisch schwermetallfreier bzw. -armer Pfropfpolymerisate, da sich bekanntermaßen derartige Metallspuren nachteilig auf anwendungstechnische Eigenschaften von Kunststoffen auswirken können. Das Verfahren arbeitet mit wäßrigen Lösungen von Ascorbinsäure und wäßrigen Lösungen von Hydroperoxid; vorteilhaft ist es, nicht genügend wasserlösliche Hydroperoxide wie Cumolhydroperoxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. In einer bevorzugten Variante wird das Hydroperoxid anteilmäßig mit dem zu bepfropfenden Kautschuk in den Reaktoren vorgelegt; die Pfropfmonomeren sowie die restlichen Anteile Ascorbinsäure, Hydroperoxid und ggf. Emulgator werden mit fortschreitender Polymerisation der Pfropfmonomeren separat in den Reaktor eingespeist.

Die Mengen Hydroperoxid und Ascorbinsäure sind kritisch. Bei der Überdosierung von Hydroperoxid und/oder Ascorbinsäure wird die Pfropfpolymerisation beeinträchtigt. Die Pfropfausbeute geht zurück; das Molekulargewicht des gepfropften und des freien Harzes wird geringer; Unter oder Überschreitung der Mengen an Hydroperoxid und Ascorbinsäure kann sich außerdem empfindlich auf Monomerumsatz und Emulsionsstabilität auswirken, so daß die technische Realisierung der Pfropfpolymerisation unmöglich wird.
Um die Durchführung des Verfahrens, die Struktur der Pfropfpolymerisate und deren physikalische Eigenschaften zu optimieren, sind bei der Pfropfpolymerisation eine Temperatur von 40 bis 70 °C und die oben angegebenen Hydroperoxid/Ascorbinsäuremengen unbedingt einzuhalten.

Bei der Pfropfpolymerisation bis zu Monomerumsätzen von größer 90 Gew.-%, insbesondere größer 98 Gew.-%, fallen lagerstabile Pfropfpolymeremulsionen mit Polymerisatgehalten von 25 bis 50 Gew.-% an; das Pfropfpolymerisat selbst läßt sich gut aus den Emulsionen durch bekannte Koagulations-Verfahren (z.B. mittels Säuren oder Salzen) isolieren.

Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Die erfindungsgemäß zu verwendende Menge an Pfropfpolymerisat B für Polyethersulfon-Formmassen liegt zwischen 1 und 95 Gew.-%, vorzugsweise zwischen 2 und 60 Gew.-%, insbesondere zwischen 3 und 40 Gew.-%, bezogen jeweils auf 100 Gew.-% an Pfropfpolymerisat und Polyethersulfon.

Komponente C

Als erfindungsgemäße weitere Komponente kommen thermoplastische Harze der folgenden Gruppen in Frage:

C.1 Vinylcopolymerisate
C.2 Polyalkylenterephthalate
C.3 aromatische Polycarbonate
C.4 aromatische Polyestercarbonate

Diese thermoplastischen Harze können maximal die Hälfte, vorzugsweise maximal ein Drittel der aromatischen Polyethersulfone gemäß Komponente A ersetzen.

Erfindungsgemäß einsetzbare Vinylcopolymerisate gemäß Komponente C.1 sind solche aus wenigstens einem Monomeren aus der Reihe Styrol, α-Methylstyrol, kernsubstituiertem Styrol (C.1.1) mit wenigstens einem Monomeren aus der Reihe Acrylnitril, Methacrylnitril, Methylmethacrylat, Maleinsäureanhydrid, N-substituiertes Maleinimid (C.1.2).

Thermoplastische Copolymerisate mit einer Zusammensetzung gemäß Komponente C.1 können bei der Pfropfpolymerisation zur Herstellung der Komponente B als Nebenprodukte entstehen; die erfindungsgemäß einsetzbare Menge an Copolymerisat C.1 bezieht dieses Nebenprodukt der Pfropfpolymerisation nicht mit ein.

Die Copolymerisate gemäß Komponente C.1 sind harzartig, thermoplastisch und kautschukfrei. Besonders bevorzugte Copolymerisate C.1 sind solche aus Styrol und/oder α-Methylstyrol mit Acrylnitril und ggf. mit Methylmethacrylat.

Besonders bevorzugte Gewichtsverhältnisse im thermoplastischen Copolymerisat C.1 sind 60 bis 80 Gew.-% C.1.1 und 40 bis 20 Gew.-% C.1.2.

Als kernsubstituierte Styrole seien Halogenstyrole und p-Methylstyrol erwähnt.

Die Copolymerisate gemäß Komponente C.1 sind bekannt und lassen sich durch radikalische Polymerisation, insbesondere durch Emulsions-, Suspensions-, Lösungs- oder Massepolymerisation herstellen. Die Copolymerisate gemäß Komponente C.1 besitzen vorzugsweise Molekulargewichte $M_w$ (Gewichtsmittel, ermittelt durch Lichtstreuung oder Sedimentation) zwischen 15 000 und 200 000 und Grenzviskositäten zwischen 20 und 110 dl/g (gemessen in Dimethylformamid bei 25 °C).

Polyalkylenterephthalate C.2 im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser Verlag, München, 1973).

Bevorzugte Polyalkylenterephthalate C.2 enthalten mindestens 80, vorzugsweise mindestens 90 Mol.-%, bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate C.2 können neben Terephthalsäureresten bis zu 20 Mol.-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4′-Diphenyldicarbonsäure, Bernstein-, Adipin-, Sebacin-, Azelain-, Cyclohexandiessigsäure.

Die bevorzugten Polyalkylenterephthalate C.2 können neben Ethylenglykol- bzw. Butandiol-1,4-resten bis zu 20 Mol.-%, vorzugsweise bis zu 10 Mol.-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate C.2 können durch Einbau relativ kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispielsweise bevorzugte Verzweigungsmittel sind Trimesinsäure, Trimellithsäure, Trimethylolethan und -propan und Pentaerythrit.

Besonders bevorzugt sind Polyalkylenterephthalate C.2, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente C.2 vorzugsweise verwendeten Polyalkylenterephthalate besitzen im allgemeinen

eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1 : 1 Gewichtsteile) bei 25 °C und einer Konzentration von 0,5 g/dl.

Als aromatische Polycarbonate C.3 können Homopolycarbonate und Copolycarbonate eingesetzt werden. Diese sind z.B. in US 2 999 835, GB-PS 772 627 und DE-OS 3 334 872 beschrieben. Besonders bevorzugte aromatische Polycarbonate sind aus Bisphenol A und Phosgen aufgebaut.

Vollaromatische Polyestercarbonate C.4 im Sinne der Erfindung sind überwiegend bis ausschließlich aus aromatischen $C_8$-$C_{14}$-Dicarbonsäuren, $C_6$-$C_{30}$-Diphenolen und Kohlensäurederivaten, z.B. Phosgen, aufgebaut.

Bevorzugte aromatische Dicarbonsäuren sind beispielsweise: Isophthalsäure, Terephthalsäure, Diphenylether-4,4′-dicarbonsäure. Naphthalin-2,6-dicarbonsäure sowie beliebige Mischungen dieser Säuren. Besonders bevorzugt sind Iso- und Terephthalsäure. Bevorzugtes Kohlensäurederivat ist Phosgen.

Bevorzugte Diphenole für die Herstellung der vollaromatischen Polyestercarbonate C.4 sind Verbindungen der Formel (I)

HO-Z-OH (I),

worin

Z einen zweiwertigen, ein- oder mehrkernigen aromatischen Rest mit 6 bis 30 C-Atomen bedeutet; wobei Z derart gebaut ist, daß die beiden OH-Gruppen direkt an je ein C-Atom eines aromatischen Systems gebunden sind.

Besonders bevorzugte Diphenole sind Verbindungen der Formel (III).

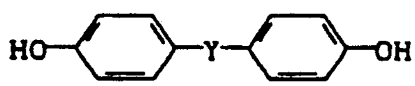 (II)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-,

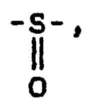, 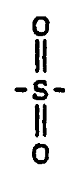 oder 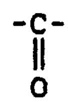 bedeutet,

sowie deren kernalkylierte und kernhalogenierte Derivate.

Beispiele für Diphenole sind:

Hydrochinon,
Resorcin
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α′-Bis-(hydroxyphenyl)-diisopropylbenzole
sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4′-Dihydroxydiphenylsulfid, 4,4′-Dihydroxydiphenylsulfon sowie deren di- und tetrahalogenierte Derivate. Besonders bevorzugt ist Bisphenol A. Es können auch beliebige Mischungen der genannten Diphenole verwendet werden.

Mögliche Verzweigungsmittel sind in den DE-OS 2 940 024 und 3 007 934 genannt.

Als Kettenabbrecher für die vollaromatischen Polyestercarbonate C.4 werden vorzugsweise Phenol, Alkylphenole mit $C_1$-$C_{12}$-Alkylgruppen, halogenierte Phenole, Hydrodiphenyl, Naphthole, Chlorkohlensäureester aus solchen phenolischen Verbindungen und Chloride von aromatischen Monocarbonsäuren, die ggf. durch $C_1$-$C_{22}$-Alkylgruppen und Halogenatome substituiert sein können, in Mengen von 0,1 bis 10

Mol.-% (im Falle von Phenolen bezogen auf Diphenole, im Falle von Säurechloriden bezogen auf Säurechloride) verwendet. Weiterhin kommen die Chloride von aliphatischen Monocarbonsäuren in mit bis zu 22 C-Atomen in Betracht.

Am Aufbau der vollaromatischen Polyestercarbonate C.4 können auch bis jeweils 30 Mol.-%, bevorzugt bis 20 Mol.-% der Dicarbonsäuren und Dihydroxyverbindungen durch aliphatische Baugruppen, z.B. Adipinsäure, Butandiol-1,4, ersetzt sein.

Weiterhin können die vollaromatischen Polyestercarbonate C.4 teilweise aus aromatischen Hydroxycarbonsäuren, wie p-Hydroxy-benzoesäure, aufgebaut sein. Der Anteil solcher Hydroxycarbonsäuren kann bis zu 100 Mol.-%, bevorzugt 30 bis 50 Mol.-% (bezogen auf Bisphenol) betragen.

Falls Iso- und Terephthalsäure gemeinsam am Aufbau der vollaromatischen Polyestercarbonate C.4 beteiligt sind, kann der Terephthalsäureanteil 1 bis 99 %, bevorzugt 25 bis 75 % des Gesamtesteranteiles betragen.

Die vollaromatischen Polyestercarbonate können 1 bis 99 Mol.-%, insbesondere 30 bis 80 Mol.-%, Estergruppen, bezogen auf die Summe von Ester- und Carbonatgruppen, enthalten.

Sowohl der Ester- als auch der Carbonatanteil der vollaromatischen Polyestercarbonate C.4 kann in Form von Blöcken oder statisch verteilt im Polykondensat vorliegen.

Die Herstellung der vollaromatischen Polyestercarbonate C.4 ist bekannt und z.B. in den DE-OS 1 495 626, 2 232 877, 2 703 376, 3 000 610, 2 714 544, 2 940 024, 3 007 934 oder US 3 169 121 beschrieben. Besonders bevorzugt ist das Phasengrenzflächenverfahren.

Die relative Lösungsviskosität ($\eta_{rel}$) der vollaromatischen Polyestercarbonate C.4 liegt im Bereich von 1,18 bis 1,4, vorzugsweise 1,22 bis 1,3 (gemessen an Lösungen von 0,5 g Polyestercarbonat in 100 ml $CH_2Cl_2$-Lösung bei 25 °C).

Ein gewünschter Carbonatgruppengehalt kann auch durch mischen von vollaromatischem Polyestercarbonat mit aromatischem Polycarbonat eingestellt werden. Das bedeutet, daß eine erfindungsgemäße Komponente C.4 auch dann vorliegt, wenn das vollaromatische Polyestercarbonat teilweise, d.h. zu 5 bis 95 Gew.-%, bevorzugt 10 bis 50 Gew.-%, durch ein aromatisches Polycarbonat ersetzt wird.

Die Polyethersulfon-Formmassen können weitere für thermoplastische, aromatische Polyethersulfone sowie für die unter C genannten thermoplastischen Harze übliche Zusätze wie Stabilisatoren, Pigmente, Fließhilfsmittel, Entformungsmittel, Flammschutzmittel und Antistatika enthalten.

Entsprechend übliche Zusätze für Pfropfpolymerisate können ebenfalls zugesetzt werden.

Die Polyethersulfon-Formmassen, enthaltend die Komponenten A, B und ggf. C und/oder wirksame Mengen an üblichen Stabilisatoren, Pigmenten, Fließmitteln, Entformungsmitteln, Flammschutzmitteln und/oder Antistatika werden hergestellt, indem man die jeweiligen Bestandteile in bekannter Weise vermischt und bei Temperaturen von 200 °C bis 330 °C in üblichen Aggregaten, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A, B und ggf. C und/oder wirksame Mengen an üblichen Stabilisatoren, Pigmenten, Fließmitteln, Entformungsmitteln, Flammschutzmitteln und/oder Antistatika, das dadurch gekennzeichnet ist, daß man die Komponenten A, B und ggf. C, Stabilisatoren, Pigmente, Fließmittel, Entformungsmittel, Flammschutzmittel und/oder Antistatika in bekannter Weise vermischt und danach bei Temperaturen von 200 °C bis 330 °C in gebräuchlichen Aggregaten schmelzcompoundiert oder schmelzextrudiert.

Die Vermischung der einzelnen Bestandteile kann in bekannter Weise sowohl sukzessiv als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind einmal Gehäuseteile jeder Art, z.B. für Haushaltsgeräte wie Saftpressen, Kaffeemaschinen und Mixer, zum anderen Abdeckplatten für den Bausektor und Teile für den Bausektor und insbesondere Teile für den Kfz-Sektor. Sie werden außerdem auf dem Gebiet der Elektrotechnik, beispielsweise für Steckerleisten, eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

## Beispiele

Angegebene Teile bedeuten Gewichtsteile.

A) Aromatisches Polyethersulfon

1147,7 Tl. Bis-2,2-(4-hydroxyphenyl)-propan und 1435,8 Tl. Bis-(4-chlor-phenyl)-sulfon werden unter Stickstoff in 4500 Tl. N-Methylpyrrolidon und 970 Tl. Chlorbenzol gelöst und mit 760 Tl. wasserfreiem Kaliumcarbonat versetzt. Das Reaktionsgemisch wird innerhalb von 30 min auf 180 °C erhitzt und dort für 5 h gehalten, wobei ein Gemisch aus Wasser und Chlorbenzol abdestilliert. Innerhalb weiterer 4 h wird das Chlorbenzol abdestilliert. Nach einer Reaktionszeit von 6 h wird das Reaktionsgemisch auf 60 bis 70 °C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25 °C).

B) Pfropfpolymerisat

B.1

Pfropfpolymerisat aus 50 Gew.-% Dienkautschuk (a) und 50 Gew.-% SAN-Copolymer gemäß deutscher Patentanmeldung P 3 708 913.7 (Le A 25 099)

a) Pfropfgrundlage bildet die Emulsion (Latex) eines partiell vernetzten, grobteiligen Polybutadiens mit einem mittleren Teilchendurchmesser von 0,38 µm ($d_{50}$-Wert), einem Gelgehalt von 89 Gew.-%. Die Emulsion enthält 50 Gew.-% Polymerisatfeststoff.

b) Herstellung des Pfropfpolymerisats

Eine Mischung aus 200 Gew.-Tl. des Latex (a) und 149 Gew.-Tl. Wasser werden in einem Reaktor vorgelegt und auf 60 bis 62 °C aufgeheizt. Bei dieser Temperatur werden folgende zwei Lösungen bzw. Emulsionen in nachfolgender Reihenfolge in den Reaktor eingegeben:

1. 0,0836 Gew.-Tl, Cumolhydroperoxid
6,9600 Gew.-Tl. Wasser
0,0600 Gew.-Tl. Na-Salz von $C_{14}$-$C_{16}$-Alkylsulfonsäuren

2. 0,0557 Gew.-Tl. Ascorbinsäure
6,9600 Gew.-Tl. Wasser

Danach werden nachstehende Zuläufe innerhalb von 4 h bei einer Innentemperatur von 60 bis 62 °C in den Reaktor unter Rühren eindosiert:

Z1. 39,05 Gew.-Tl. Wasser
4,00 Gew.-Tl. Na-Salz der disproportionierten Abietinsäure
3,10 Gew.-Tl. 1n-Natronlauge
0,62 Gew.-Tl. Cumolhydroperoxid

Z2. 72 Gew.-Tl. Styrol
28 Gew.-Tl. Acrylnitril

Z3. 39,8 Gew.-Tl, Wasser
0,105 Gew.-Tl. Ascorbinsäure

Anschließend wird bei 60 bis 62 °C 6 h lang auspolymerisiert. Der Monomerumsatz ist größer als 97 Gew.-%.

Nach Stabilisierung mit 1,2 Gew.-Tl. phenolischem Antioxidanz, pro 100 Gew.-Tl. Pfropfpolymer, wird das Pfropfpolymer durch Koagulation mit einer Essigsäure/Mg-Sulfat-Mischung isoliert, gewaschen und zu einem Pulver getrocknet.

Die SAN-Pfropfung verlief mit einer Pfropfausbeute von 89 Gew.-%.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (s. R. Kuhn, Makromol-Chemie 177, 1525 (1976)).

B.2

Pfropfpolymerisat aus 50 Gew.-% Dienkautschuk mit einem mittleren Teilchendurchmesser von 0,1 µm ($d_{50}$-Wert) ein Gelgehalt größer 80 Gew.-% und 50 Gew.-% SAN-Copolymer (Herstellung analog deutscher Patentanmeldung P 3 708 913.7 (Le A 25 099))

B.3

Pfropfpolymerisat aus 50 Gew.-% Dienkautschuk (a) und 50 Gew.-% SAN-Copolymer nach herkömmlichen Herstellungsverfahren (Vergleichsbeispiel)

In einem Reaktor werden vorgelegt:
1500 Gew.-Tl. der Emulsion a und 1030 Gew.-Tl. Wasser. Nach Aufheizen auf 65° C wird eine Starterlösung aus 3 Gew.-Tl. Kaliumperoxidisulfat in 50 Gew.-Tl. Wasser eingespeist. Anschließend werden folgende zwei Lösungen innerhalb von 6 h bei 65° C in den Reaktor eingespeist:

1. 540 Gew.-Tl. Styrol
210 Gew.-Tl. Acrylnitril
2. 1000 Gew.-Tl. Wasser
13 Gew.-Tl. Na-Salz der disproportionierten Abietinsäure
10 Gew.-Tl. 1n-Natronlauge

Im Anschluß daran wird durch Nachrühren bei 65° C innerhalb von 4 h auspolymerisiert. Der Monomerumsatz ist größer als 98 Gew,-%. Die Stabilisierung und Isolierung der Pfropfpolymerisate erfolgt analog Vorschrift B.1. Die SAN-Pfropfung verlief mit einer Pfropfausbeute von 55 Gew.-%. Die Bestimmung der Pfropfausbeute erfolgte wie für B.1.

C) Thermoplastisches Harz

C.1

Styrol/Acrylnitril-Copolymerisat mit einem Styrol/Acrylnitril-Verhältnis von 72 : 28 und einer Grenzviskosität von $\eta$ = 0,55 dl/g (Messung in Dimethylformamid bei 20° C)

C.2

Lineares Polyethylenterephthalat mit einer Intrinsic-Viskosität $\eta$ = 0,76 dl/g, gemessen in Phenol/o-Dichlorbenzol (1 : 1 Gew.-Tl.) bei 25° C und einer Konzentration von 0,5 g/dl

C.3

Lineares Polycarbonat auf Basis Bisphenol A mit einer relativen Lösungsviskosität $\eta_{rel}$ von 1,26 bis 1,28, gemessen in $CH_2Cl_2$ bei 25° C und einer Konzentration von 0,5 g/100 ml

C.4

Polyestercarbonat mit einem Esteranteil von 50 Mol.-% auf Basis von Bisphenol A, Iso- und Terephthalsäure (1 : 1) mit 3 Mol.-%, bezogen auf Bisphenol A-Einheiten, p-Isooctylphenyl-Endgruppen mit einer relativen Viskosität $\eta_{rel}$ von 1,30 (gemessen an einer Lösung von 0,5 g Polyestercarbonat in 100 ml $CH_2Cl_2$ bei 25° C)

2. Herstellung und Prüfung der Formmassen

Die Compoundierung der Komponenten A, B und ggf. C erfolgte auf einem 3 l-Innenkneter bei Temperaturen von 200 bis 280° C.

Die Herstellung von Formkörpern erfolgte, soweit nicht anders angegeben, auf einer Spritzgußmaschine bei 280° C.

Die Bestimmung der Wärmeformbeständigkeit nach Vicat B erfolgte gemäß DIN 53 460.

Die Kerbschlagzähigkeit nach Methode ISO 180 wurde an Stäben der Abmessung 80 x 10 x 4 $mm^3$ (Verarbeitungstemperatur: 280° C) bei Raumtemperatur, -20° C, -40° C und -60° C gemessen. Daraus wurde der Zäh-Spröd-Übergang bestimmt, d.h. jener Temperaturbereich, in dem die ersten Sprödbrüche auftreten.

Zur Ermittlung der Zusammenfließnahtfestigkeit wurde die Schlagzähigkeit nach DIN 53 453 (Charpy-Methode) an der Bindenaht von beidseitig angespritzten Prüfkörpern (Verarbeitungstemperatur: 280° C) der Dimension 170 x 10 x 4 $mm^3$ gemessen.

Wie in Tabelle 1 deutlich wird, zeigen die erfindungsgemäßen Beispiele A und B wesentlich höhere Fließnahtfestigkeiten bei vergleichbarer oder höherer Vicat-Temperatur.

Tabelle 1

| Zusammensetzung der Formmassen und ihre Eigenschaften | | | | | | |
|---|---|---|---|---|---|---|
| Beispiel | Komponenten | | | | Vicat B °C | Fließnahtfestigkeit $a_nF$ kJ/m² |
| | A | B1 | B2 | B3 | | |
| | Gew.-% | | | | | |
| A | 75 | 25 | - | - | 168 | 19,5 |
| B | 75 | - | 75 | - | 172 | 11,7 |
| C (Vergleich) | 75 | - | - | 75 | 167 | 4,3 |

Wie aus Tabelle 2 deutlich wird, besitzt die erfindungsgemäße Formmasse A, die ein besonders bevorzugtes Pfropfpolymerisat mit einem mittleren Teilchendurchmesser von 0,1 µm enthält, neben der erfindungsgemäß verbesserten Fließnahtfestigkeit (s. Tab. 1) deutlich höhere Kerbschlagzähigkeit bei tiefen Temperaturen und damit auch einem tieferen Zäh-Spröd-Übergang.

Tabelle 2

| Zusammensetzung der Formmassen und ihre Eigenschaften | | | | | |
|---|---|---|---|---|---|
| Beispiel | Komponenten | | | Kerbschlagzähigkeit ak bei -20 °C kJ/m² | Zäh/Spröd-Übergang °C |
| | A | B.2 | B.3 | | |
| | Gew.-% | | | | |
| A | 75 | 25 | - | 40 | -30 |
| B (Vergleich) | 75 | - | 25 | 19 | -10/-20 |

Auch nach Zugabe eines weiteren thermoplastischen Harzes (s. Tab. 3) weisen die erfindungsgemäßen Formmassen gegenüber den Vergleichsbeispielen wesentlich höhere Fließnahtfestigkeiten auf.

Tabelle 3

| Zusammensetzung der Formmassen und ihre Eigenschaften | | | | | | | | |
|---|---|---|---|---|---|---|---|---|
| Beispiel | Komponenten | | | | | | | Fließnahtfestigkeit $a_nF$ kJ/m² |
| | A | B.1 | B.3 | C.1 | C.2 | C.3 | C.4 | |
| | Gew.-% | | | | | | | |
| A | 60 | 20 | — | 20 | — | — | — | 10,8 |
| B (Vergleich) | 60 | — | 20 | 20 | — | — | — | 4,0 |
| C | 60 | 20 | — | — | 20 | — | — | 6,4 |
| D (Vergleich) | 60 | — | 20 | — | 20 | — | — | 4,8 |
| E | 60 | 20 | — | — | — | 20 | — | 21,6 |
| F (Vergleich) | 60 | — | 20 | — | — | 20 | — | 11,3 |
| G | 60 | 20 | — | — | — | — | 20 | 17,1 |
| H (Vergleich) | 60 | — | 20 | — | — | — | 20 | 10,2 |

## Ansprüche

1. Thermoplastische Formmassen, enthaltend

A 5 bis 99 Gew.-%, bezogen auf die Summe A + B, eines aromatischen Polyethersulfons mit einer Grundstruktur, die aus wiederkehrenden Einheiten der Formel (I)

$\{O\text{-}Z\text{-}O\text{-}W\}$ (I)

besteht, worin Z den Rest eines zweiwertigen Phenols und W den Rest einer benzoiden Dihalogenverbindung mit einer inerten, elektronenanziehenden Gruppe bedeuten

und

B 1 bis 95 Gew.-%, bezogen auf die Summe A + B, eines Dienpfropfpolymerisats aus

B.1 5 bis 90 Gew.-Tl. einer Mischung aus

B.1.1 50 bis 95 Gew.-Tl. Styrol, α-Methylstyrol, $C_1$-$C_4$-Alkyl- oder Halogen-kernsubstituiertem Styrol, Methylmethacrylat oder Mischungen daraus und

B.1.2 5 bis 50 Gew.-Tl. Acrylnitril, Methacrylnitril, Methylmethycrylat, Maleinsäureanhydrid, $C_1$-$C_4$-Alkyl bzw. Phenyl-N-substituiertem Maleinimid oder Mischungen daraus, auf

B.2 10 bis 95 Gew.-Tl. Dienkautschuk mit einem mittleren Teilchendurchmesser $d_{50}$ von 0,09 bis 1 µm und einem Gelgehalt von mehr als 50 Gew.-%, bezogen auf das Gewicht von B.2, wobei zur Pfropfpolymerisation ein Initiatorsystem aus einem organischen Hydroperoxid und Ascorbinsäure verwendet wird

und gegebenenfalls

C. ein weiteres thermoplastisches Harz, ausgewählt aus der Gruppe der Vinylcopolymerisate, Polyalkylenterephthalate, der aromatischen Polycarbonate und der aromatischen Polyestercarbonate, wobei maximal die Hälfte des aromatischen Polyethersulfons gemäß Komponente A durch andere thermoplastische Harze gemäß Komponente C ersetzt werden kann.

2. Formmassen gemäß Anspruch 1, dadurch gekennzeichnet, daß sie 40 bis 98 Gew.-% Komponente A und 2 bis 60 Gew.-% Komponente B enthalten.

3. Formmassen gemäß Ansprüchen 1 und 2, dadurch gekennzeichnet, daß das Pfropfpolymerisat B aus 20 bis 80 Gew.-Tl. Pfropfmonomeren B.1 und 20 bis 80 Gew.-Tl. Dienkautschuk B.2 hergestellt ist.

4. Formmassen gemäß Ansprüchen 1 bis 3, dadurch gekennzeichnet, daß die mittleren Teilchendurchmesser der Dienkautschuke B.2 0,09 bis 0,6 µm betragen.

5. Formmassen gemäß Ansprüchen 1 bis 4, dadurch gekennzeichnet, daß der Gelgehalt der Dienkautschuke B.2 mehr als 70 Gew.-%, bezogen auf B.2 beträgt.

6. Formmassen gemäß Ansprüchen 1 bis 5, dadurch gekennzeichnet, daß das Pfropfpolymerisat B durch Pfropfpolymerisation der Monomeren B.1 in wäßriger Emulsion in Gegenwart einer Emulsion des Kautschukpolymerisates B.2 bei Temperaturen von 40° C bis 70° C hergestellt wird, wobei 0,3 bis 1,5 Gew.-Tl. Hydroperoxid : und 0,1 bis 1 Gew.-Tl. Ascorbinsäure, jeweils bezogen auf 100 Gew.-Tl. Pfropfmonomere

B.1, eingesetzt werden, und wobei das Gewichtsverhältnis Hydroperoxid Ascorbinsäure 0,3 bis 15 ist.

7. Formmassen gemäß Ansprüchen 1 bis 6, dadurch gekennzeichnet, daß maximal ein Drittel der Gewichtsprozente der Komponente A durch andere thermoplastische Harze gemäß Komponente C ersetzt werden kann.

8. Formmassen gemäß Ansprüchen 1 bis 7, dadurch gekennzeichnet, daß sie zusätzlich mindestens einen Zusatz, ausgewählt aus der Gruppe der Stabilisatoren, Pigmente, Fließhilfsmittel, Entformungsmittel, Flammschutzmittel und Antistatika enthalten.

9. Verfahren zur Herstellung der Formmassen der Ansprüche 1 bis 8, dadurch gekennzeichnet, daß man die Komponenten A, B und ggf. C sowie gegebenenfalls Stabilisatoren, Pigmente, Fließhilfsmittel, Entformungsmittel, Flammschutzmittel und/oder Antistatika in bekannter Weise vermischt und bei erhöhter Temperatur in üblichen Vorrichtungen schmelzcompoundiert oder schmelzextrudiert.

10.Verwendung der Formmassen der Ansprüche 1 bis 8 zur Herstellung von Formkörpern.